# EUROPÄISCHE PATENTSCHRIFT

(11) **EP 3 026 457 B1**
(45) Veröffentlichungstag und Bekanntmachung des Hinweises auf die Patenterteilung: **28.02.2018**
(21) Anmeldenummer: 15193470.0
(22) Anmeldetag: 06.11.2015
(51) Int. Cl.: G01S 13/04, G01S 15/04, G01S 7/40, G01S 7/497, G01S 17/02, G01S 7/52, E05F 15/73

(54) **VORRICHTUNG ZUR ÜBERWACHUNG EINES ERFASSUNGSFELDS**
DEVICE FOR MONITORING A DETECTION FIELD
DISPOSITIF DE SURVEILLANCE D'UN CHAMP DE DETECTION

(30) Priorität: 27.11.2014 DE 102014224317
(43) Veröffentlichungstag der Anmeldung: 01.06.2016
(73) Patentinhaber: GEZE GmbH, 71229 Leonberg (DE)
(72) Erfinder: Hucker, Dr., Matthias, 76359 Marxzell (DE)

(56) Entgegenhaltungen:
- WO-A1-01/82592
- DE-A1- 4 217 426
- DE-A1-102008 008 149
- DE-A1-102011 075 062
- DE-A1-102011 106 178

## Beschreibung

Die Erfindung betrifft eine Vorrichtung zur Überwachung eines Erfassungsfelds der im Oberbegriff des Patentanspruchs 1 angegebenen Art.

Zur Absicherung und/oder Ansteuerung automatischer Türen aber auch allgemein von Maschinen werden Sensoreinheiten mit mindestens einem Sensorelement eingesetzt. Diese Sensoreinheiten sind als so genannte Präsenzmelder ausgeführt und detektieren beispielsweise die Anwesenheit von Personen oder Gegenständen oder deren Bewegungen. Abhängig von der Anwendung können verschiedene Sensorarten, wie beispielsweise aktive Infrarotsensoren, passive Infrarotsensoren, Ultraschallsensoren, Radarsensoren oder Videosensoren sowohl zur Präsenz wie auch zur Bewegungsdetektion eingesetzt werden. Bei allen diesen physikalischen Prinzipien ist für die Funktion der Sensoreinheit eine korrekte Ausrichtung eines zugehörigen Erfassungsfeldes erforderlich. So kann ein falsch eingestelltes Erfassungsfeld beispielsweise zu einer Selbstansteuerung der zu überwachenden Vorrichtung führen. Eine solche Selbstansteuerung kann bei einem automatischen Türantrieb dazu führen, dass ein sich schließender Türflügel über das falsch eingestellte Erfassungsfeld den Bewegungsmelder wieder aktiviert, so dass dieser die Tür wieder öffnet.

Zudem kann eine Überwachungssensoreinheit ihre Sicherheitsfunktion zum Teil oder komplett verlieren, falls ihr Erfassungsfeld den Gefahrenbereich der zu überwachenden Vorrichtung, wie beispielsweise einer Maschine mit beweglichen Teilen, nur teilweise oder überhaupt nicht abdeckt. Dadurch kann die Überwachungssensoreinheit ihre Funktion als Präsenzmelder zum Anhalten der Bewegung der Maschine nicht ordnungsgemäß ausführen.

Des Weiteren kann eine Sensoreinheit ihre Sicherheitsfunktion verlieren, falls sein Erfassungsfeld den Ansteuerbereich der korrespondierenden Vorrichtung nicht vollständig abdeckt. Dadurch kann die Sensoreinheit ihre Funktion als Bewegungsmelder zum Ansteuern eines Türantriebs, wie beispielsweise zum automatischen Öffnen von Türen in Rettungswegen nicht mehr ordnungsgemäß ausführen.

Die Ausrichtung des Erfassungsfeldes geschieht heute bei den meisten Sensoreinheiten manuell, d.h. das Sende- und/oder Empfangsmodul der Sensoreinheit ist beispielsweise über Federelemente, federnde bzw. elastische Verbindungen, Schrauben, Rasten usw. mechanisch fixiert bzw. geklemmt. Zur Einstellung des Erfassungsfeldes wird die mechanische Fixierung bzw. Klemmung manuell gelöst und die Sensoreinheit entsprechend bewegt. Die klemmende Ausrichtung des Erfassungsfeldes erfolgt beispielsweise in zwei Ebenen. Zudem sind Sensoreinheiten (z.B. Webcam) bekannt, deren Erfassungsfeld beispielsweise über einen Stellmotor automatisch verstellt werden kann.

Eine Überwachung der Ausrichtung des Erfassungsfeldes wird bei den bekannten Sensoreinheiten nicht durchgeführt. So werden beispielsweise bei einer Sicherheitssensoreinheit an einer automatischen Tür die Kommunikation bzw. die Signale zwischen der Sensoreinheit und einer Türsteuerung oder die Funktion der elektrischen Schaltkreise der Sensoreinheit oder die Unempfindlichkeit gegen Fremdlicht überwacht. Im Fehlerfall geht der Türantrieb in den sicheren Zustand.

Aus der EP 2 230 536 A1 ist ein optischer Sensor zum Überwachen eines Überwachungsbereichs, insbesondere eines Öffnungsbereichs einer Tür bekannt. Über eine Montageeinrichtung kann der Sensor an einem Einsatzort, wie beispielsweise an einem Türblatt montiert werden. Der Sensor umfasst ein Sensormodul, welches an der Montageeinrichtung um eine Achse verschwenkbar angeordnet ist, und eine manuell drehbare Stelleinrichtung zum Einstellen einer Winkelstellung des Sensormoduls bezüglich der Montageeinrichtung. Zum untersetzten Übertragen einer Drehung der Stelleinrichtung auf eine Verschwenkung des Sensormoduls ist an der Stelleinrichtung oder dem Sensormodul eine spiralförmige Führungsbahn und an der jeweils anderen Komponente ein Führungselement ausgebildet, so dass das Führungselement beim Drehen der Stelleinrichtung in der spiralförmigen Führungsbahn geführt wird.

In der DE 10 2011 106 178 A1 weist die Sensoreinheit mindestens ein zweites Sensorelement auf, wobei eine Auswerte- und Steuereinheit aus einem Ausgabesignal des mindestens einen zweiten Sensorelements einen aktuellen Neigungswinkel des mindestens einen ersten Sensorelements ermittelt und auswertet.

Der Erfindung liegt die Aufgabe zugrunde, eine Vorrichtung zur Überwachung eines Erfassungsfelds anzugeben, welches eine einfache und kostengünstige Überwachung des Erfassungsfelds ermöglicht.

Diese Aufgabe wird durch die Merkmale der Vorrichtung zur Überwachung eines Erfassungsfelds nach Patentanspruch 1 gelöst.

Vorteilhafte Ausgestaltungen und Weiterbildungen der Erfindung sind in den übrigen Ansprüchen angegeben.

Die erfindungsgemäße Vorrichtung zur Überwachung eines Erfassungsfelds weist eine Sensoreinheit mit mindestens einem ersten Sensorelement auf, welche das Erfassungsfeld erzeugt. Die Sensoreinheit ist über eine Halterung um mindestens eine Achse verschwenkbar angeordnet. Erfindungsgemäß weist die Sensoreinheit mindestens ein zweites Sensorelement auf, wobei eine Auswerte- und Steuereinheit aus einem Ausgabesignal des mindestens einen zweiten Sensorelements einen aktuellen Neigungswinkel des mindestens einen ersten Sensorelements ermittelt und auswertet.

Bei einer bevorzugten Ausführungsform der erfindungsgemäßen Verriegelungsanordnung kann die Auswerte- und Steuereinheit nach Abschluss der Montage einen aktuellen Neigungswinkel als Referenzwinkel in einer Speichereinheit speichern. Bei der Inbetriebnahme der Vorrichtung bzw. der Sensoreinheit kann ein Monteur das Erfassungsfeld der Sensoreinheit korrekt einstellen und den entsprechenden Neigungswinkel als "korrekten Winkel" bzw. Referenzwinkel beispielsweise mit einer Fernbedienung oder einer anderen geeigneten Inbetriebnahmevorrichtung bestätigen, so dass die Auswerte- und Steuereinheit den korrekten Winkel bzw. Referenzwinkel beispielsweise in einem nichtflüchtigen Speicher speichern kann.

Zudem kann die Auswerte- und Steuereinheit überprüfen, ob der Referenzwinkel in einem vorgegebenen Wertebereich liegt. Die Auswerte- und Steuereinheit kann eine Inbetriebnahme einer dem Erfassungsfeld zugeordneten Vorrichtung freigeben, wenn der Referenzwinkel innerhalb des vorgegebenen Wertebereichs liegt. Wenn der Referenzwinkel außerhalb des vorgegebenen Wertebereichs liegt kann die Auswerte- und Steuereinheit ein Warnsignal an eine Anzeigeeinheit ausgeben und eine Inbetriebnahme der dem Erfassungsfeld zugeordneten Vorrichtung verhindern. Dadurch kann in vorteilhafter Weise vor der Inbetriebnahme geprüft werden, ob das Erfassungsfeld richtig eingestellt ist. Ist das Erfassungsfeld richtig eingerichtet, speichert die Auswerte- und Steuereinheit den Neigungswinkel, welcher die geprüfte Ausrichtung des Erfassungsfelds repräsentiert.

In weiterer vorteilhafter Ausgestaltung der erfindungsgemäßen Vorrichtung zur Überwachung eines Erfassungsfelds kann das zweite Sensorelement im Auslieferungszustand einen Neigungswinkel anzeigen, welcher außerhalb des vorgegebenen Wertebereichs für den Referenzwinkel liegt. Dadurch kann die Auswerte- und Steuereinheit in vorteilhafter Weise auch prüfen, ob der Monteur den Neigungswinkel eingestellt hat. Da der Auslieferungszustand des Sensors einen "unmöglicher Neigungswinkel" repräsentiert, kann die Auswerte- und Steuereinheit erkennen, dass der Monteur den Neigungswinkel nicht eingestellt hat und ein entsprechendes Signal ausgeben, welches die Inbetriebnahme der Vorrichtung verhindert.

In weiterer vorteilhafter Ausgestaltung der erfindungsgemäßen Vorrichtung zur Überwachung eines Erfassungsfelds kann die Auswerte- und Steuereinheit während des Betriebs den aktuellen Neigungswinkel des mindestens einen ersten Sensorelements mit dem vorgegebenen Referenzwinkel vergleichen. Die Auswerte- und Steuereinheit kann beispielsweise ein Warnsignal an die Anzeigeeinheit ausgeben und die dem Erfassungsfeld zugeordnete Vorrichtung in einen sicheren Betriebszustand überführen, wenn eine Differenz zwischen dem aktuellen Neigungswinkel und dem vorgegebenen Referenzwinkel außerhalb eines vorgegebenen Toleranzbereichs liegt. Ändert sich die Ausrichtung des Erfassungsfeldes im Betrieb der Sensoreinheit, beispielsweise wegen sich lösender Schrauben oder einer in der Klemmung rutschende Sensoreinheit oder einer Manipulation durch eine Person, welche die Sensoreinheit dreht, so kann die Auswerte- und Steuereinheit diese Ausrichtungsänderung in vorteilhafter Weise erkennen und die Vorrichtung in den sicheren Betriebszustand überführen.

In weiterer vorteilhafter Ausgestaltung der erfindungsgemäßen Vorrichtung zur Überwachung eines Erfassungsfelds kann das mindestens eine zweite Sensorelement als Neigungssensor ausgeführt werden, welcher mit dem ersten Sensorelement bewegt werden und einen Neigungswinkel relativ zu einer vom Schwerefeld der Erde vorgegebenen Lotrichtung anzeigen kann. Ein solcher Neigungssensor ist ein Beschleunigungssensor und bestimmt die Änderung des Neigungswinkels aus der Änderung der Erdbeschleunigung, welche auf ihn wirkt, falls sich die Neigung des beweglichen Teils ändert, mit welchem der Neigungssensor verbunden ist.

Alternativ kann das mindestens eine zweite Sensorelement einen Messwertgeber und einen Messwertaufnehmer aufweisen, wobei das Ausgabesignal eine relative Position des Messwertaufnehmers zum Messwertgeber anzeigt, aus welcher der Neigungswinkel des mindestens einen ersten Sensorelements ermittelt werden kann. Hierbei wird entweder der Messwertgeber oder der Messwertaufnehmer mit dem mindestens einen ersten Sensorelement bewegt. Das mindestens eine zweite Sensorelement kann beispielsweise einen als Hallsensor ausgeführten Messwertaufnehmer aufweisen, welcher die Stärke eines Magnetfelds misst. Im drehbaren Teil der Sensoreinheit ist bei dieser Ausführungsform ein als Permanentmagnet ausgeführter Messwertgeber angebracht. Wird die Sensoreinheit mit dem mindestens einen Sensorelement gedreht, so ändern sich der Abstand zwischen dem Hallsensor und dem Permanentmagneten und damit die magnetische Feldstärke, die der Hallsensor misst. Diese Anordnung hat zudem den Vorteil, dass der Hallsensor an einer ortstesten Leiterplatte der Sensoreinheit montiert werden kann und daher kein Kabel zur Signalübertragung erforderlich ist.

In weiterer vorteilhafter Ausgestaltung der erfindungsgemäßen Vorrichtung zur Überwachung eines Erfassungsfelds kann das mindestens eine erste Sensorelement das Erfassungsfeld im Infrarotfrequenzbereich und/oder im Ultraschallfrequenzbereich und/oder im Radarfrequenzbereich erzeugen Zusätzlich oder alternativ kann das mindestens eine erste Sensorelement als Videosensor ausgeführt werden. Die Auswerte- und Steuereinheit kann Ausgabesignale des mindestens einen ersten Sensorelements zur Objekterkennung innerhalb des Erfassungsfelds auswerten. Die dem Erfassungsfeld zugeordnete Vorrichtung kann eine Tür oder ein Fenster oder eine Maschine sein.

Nachfolgend werden Ausführungsbeispiele der Erfindung anhand von zeichnerischen Darstellungen näher erläutert.

Dabei zeigen:
- Fig. 1: eine schematische perspektivische Darstellung einer Schiebetür mit einem Ausführungsbeispiel einer erfindungsgemäßen Vorrichtung zur Überwachung eines Erfassungsfelds;
- Fig. 2: ein schematisches Blockdiagramm eines Ausführungsbeispiels einer erfindungsgemäßen Vorrichtung zur Überwachung eines Erfassungsfelds;
- Fig. 3: eine schematische Schnittdarstellung eines ersten Ausführungsbeispiels einer Sensoreinheit für die erfindungsgemäße Vorrichtung zur Überwachung eines Erfassungsfelds aus Fig. 2; und
- Fig. 4: eine schematische Schnittdarstellung eines zweiten Ausführungsbeispiels einer Sensoreinheit für die erfindungsgemäße Vorrichtung zur Überwachung eines Erfassungsfelds aus Fig. 2.

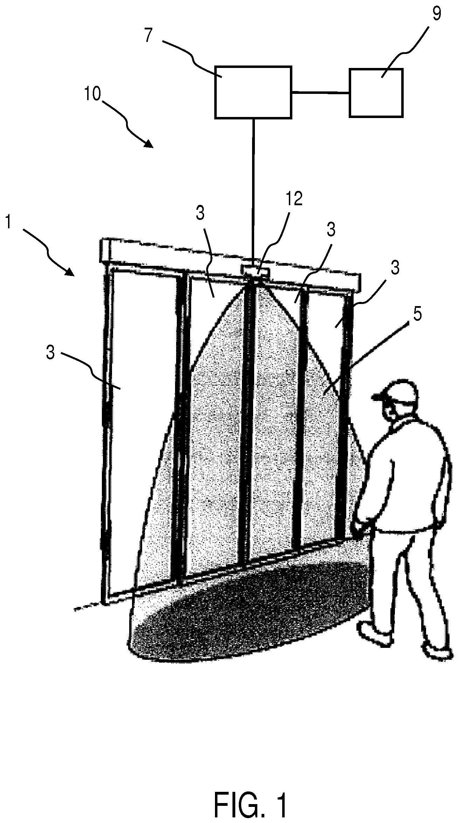

In Fig. 1 bis 4 ersichtlich ist, umfasst eine Vorrichtung 10 zur Überwachung eines Erfassungsfelds 5 eine Sensoreinheit 12, 12A mit mindestens einem ersten Sensorelement 13, welche das Erfassungsfeld 5 erzeugt. Die Sensoreinheit 12, 12A ist über eine Halterung 16 um mindestens eine Achse SA in einem vorgegebenen Schwenkbereich S verschwenkbar angeordnet. Erfindungsgemäß weist die Sensoreinheit 12, 12A mindestens ein zweites Sensorelement 14, 14A auf, wobei eine Auswerte- und Steuereinheit 7 aus einem Ausgabesignal des mindestens einen zweiten Sensorelements 14, 14A einen aktuellen Neigungswinkel des mindestens einen ersten Sensorelements 13 ermittelt und auswertet.

Im dargestellten Ausführungsbeispiel ist eine dem Erfassungsfeld 5 zugeordnete Vorrichtung als Schiebetür 1 mit mehreren Türelementen 3 ausgeführt, welche über einen nicht dargestellten Antrieb gegeneinander verschoben werden können. Bei alternativen nicht dargestellten Ausführungsbeispielen kann die dem Erfassungsfeld 5 zugeordnete Vorrichtung ein Fenster oder eine Maschine sein, deren Bewegungsbereich bzw. Ansteuerbereich überwacht werden soll.

Im dargestellten Ausführungsbeispiel erzeugt das mindestens eine erste Sensorelement 13 das Erfassungsfeld 5 im Infrarotfrequenzbereich und weist entsprechende nicht näher dargestellte Sende- und Empfangsmodule auf. Die Auswerte- und Steuereinheit 7 ist vorzugsweise als Mikrocontroller ausgeführt und wertet die Ausgabesignale des mindestens einen ersten Sensorelements 13 zur Objekterkennung innerhalb des Erfassungsfelds 5 aus. Bei alternativen nicht dargestellten Ausführungsbeispielen kann das mindestens eine erste Sensorelement 13 das Erfassungsfeld 5 im Ultraschallfrequenzbereich und/oder im Radarfrequenzbereich erzeugen. Zudem kann das mindestens eine bewegliche erste Sensorelement 13 als Videosensor ausgeführt werden.

Ausführungsformen der erfindungsgemäßen Vorrichtung 10 zur Überwachung eines Erfassungsfelds 5 erkennen in vorteilhafter Weise ein falsch eingestelltes Erfassungsfeld 5. Dazu werden in die beweglichen Teile des Sensoreinheit 12, 12A ein oder mehrere zweite Sensorelemente 14, 14A eingebaut, deren Ausgabesignale einen Neigungswinkel des beweglichen Teils der Sensoreinheit 12, 12A repräsentieren. Bei der Inbetriebnahme der Vorrichtung 1 bzw. der Sensoreinheit 12 kann ein Monteur das Erfassungsfeld 5 der Sensoreinheit 12, 12A korrekt einstellen und den entsprechenden Neigungswinkel als "korrekten Winkel" bzw. Referenzwinkel beispielsweise mit einer Fernbedienung FB oder einer anderen geeigneten Inbetriebnahmevorrichtung 20, wie einem Computer bestätigen, so dass die Auswerte- und Steuereinheit 7 den korrekten Winkel bzw. Referenzwinkel beispielsweise in einem nichtflüchtigen Speicher 9 speichern kann. Der Monteur kann die Ausrichtung des Erfassungsfelds 5 beispielsweise über eine serielle Funkverbindung (RS485) mit der Fernbedienung FB aus der Sensoreinheit 12, 12A auslesen und dokumentieren. Damit ist eine automatische Dokumentation der Ausrichtung des Erfassungsfelds in einem Prüfbuch der dem Erfassungsfeld 5 zugeordneten Vorrichtung 1 möglich. Die Kommunikationsbausteine für die Kommunikation der Vorrichtung 10 zur Überwachung eines Erfassungsfelds 5 mit der Fernbedienung FB bzw. der Inbetriebnahmevorrichtung 20 können beispielsweise auf einer Leiterplatte 11, 11A der Sensoreinheit 12 oder in der Auswerte- und Steuereinheit 7 angeordnet werden.

Zudem überprüft die Auswerte- und Steuereinheit 7 vor dem Ablegen des Referenzwinkels im Speicher 9, ob der Referenzwinkel in einem vorgegebenen Wertebereich liegt. Die Auswerte- und Steuereinheit 7 gibt eine Inbetriebnahme einer dem Erfassungsfeld 5 zugeordneten Vorrichtung 1 frei, wenn der Referenzwinkel innerhalb des vorgegebenen Wertebereichs liegt. Die Auswerte- und Steuereinheit 7 gibt ein Warnsignal an eine Anzeigeeinheit 18 aus und verhindert eine Inbetriebnahme der dem Erfassungsfeld 5 zugeordneten Vorrichtung 1, wenn der Referenzwinkel außerhalb des vorgegebenen Wertebereichs liegt.

Im dargestellten Ausführungsbeispiel zeigt das zweite Sensorelement 14, 14A im Auslieferungszustand einen Neigungswinkel an, welcher außerhalb des vorgegebenen Wertebereichs für den Referenzwinkel liegt. Dadurch kann die Auswerte- und Steuereinheit 7 auch prüfen, ob der Monteur den Neigungswinkel eingestellt hat und falls nicht ein entsprechendes Signal an eine übergeordnete Türsteuerung senden, welche die Inbetriebnahme der Schiebetür 1 verhindert.

Während des Betriebs der Vorrichtung 1 überwacht die Auswerte- und Steuereinheit 7 den Erfassungsbereich 5, indem die Auswerte- und Steuereinheit 7 den aktuellen Neigungswinkel des mindestens einen ersten Sensorelements 13 mit dem vorgegebenen Referenzwinkel vergleicht. Ändert sich die Ausrichtung des Erfassungsfeldes 5 im Betrieb der Sensoreinheit 12, 12A, beispielsweise aufgrund von sich lösender Schrauben oder in der Klemmung rutschenden Sensoren oder Manipulation, so erkennt dies die Auswerte- und Steuereinheit 7. Die Auswerte- und Steuereinheit 7 gibt ein Warnsignal an die Anzeigeeinheit 18 aus und überführt die dem Erfassungsfeld 5 zugeordnete Vorrichtung 1 in einen sicheren Betriebszustand, wenn eine Differenz zwischen dem aktuellen Neigungswinkel und dem vorgegebenen Referenzwinkel außerhalb eines vorgegebenen Toleranzbereichs liegt. Zudem ist es möglich im Rahmen der Diagnose vor Ort oder per Ferndiagnose, die Ausrichtung des Erfassungsfelds 5 zu prüfen.

Im dargestellten Ausführungsbeispiel überwacht die erfindungsgemäße Vorrichtung 10 mit der Sensoreinheit 12, 12A das Erfassungsfeld 5 der Schiebetür 1 und liefert eine Fehlermeldung, welche über ein optisches Anzeigeelement 18 ausgegeben wird, bzw. verhindert den weiteren automatischen Betrieb der Schiebetür 1, wenn der aktuelle Neigungswinkel den vorgegebenen Toleranzbereich verlässt.

Ausführungsformen der vorliegenden Vorrichtung 10 zur Überwachung eines Erfassungsfelds 5 ermöglichen auch die Überwachung, ob mehrere Sensoreinheiten 12 bzw. erste Sensorelemente 13 den gleichen Neigungswinkel aufweisen.

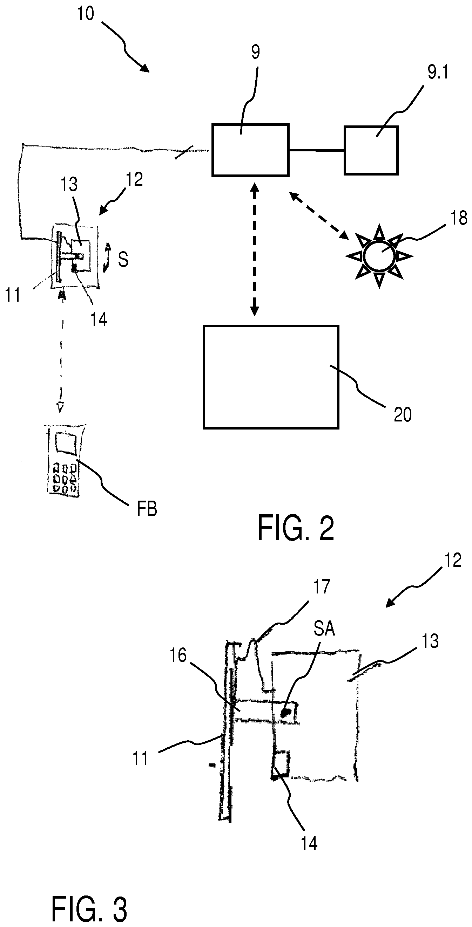

Wie aus Fig. 3 weiter ersichtlich ist, ist das mindestens eine zweite Sensorelement 14 bei einem ersten Ausführungsbeispiel der Sensoreinheit 12 als Neigungssensor ausgeführt, welcher mit dem ersten Sensorelement 13 bewegt wird und einen Neigungswinkel relativ zu einer vom Schwerefeld der Erde vorgegebenen Lotrichtung anzeigt. Die Sensorelemente 13, 14 sind über ein Verbindungskabel 17 mit der Leiterplatte 11 verbunden, auf welcher entsprechende Schnittstellenbauelemente angeordnet sind, welche eine Kommunikation zwischen der Sensoreinheit 12 und der Auswerte- und Steuereinheit 7 ermöglichen.

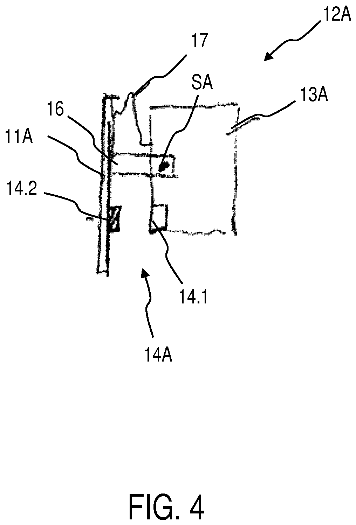

Wie aus Fig. 4 weiter ersichtlich ist, weist das mindestens eine zweite Sensorelement 14A bei einem zweiten Ausführungsbeispiel der Sensoreinheit 12A einen Messwertgeber 14.1 und einen Messwertaufnehmer 14.2 auf. Hierbei zeigt das Ausgabesignal eine relative Position des Messwertaufnehmers 14.2 zum Messwertgeber 14.1 an, aus welcher der Neigungswinkel des mindestens einen ersten Sensorelements 13 ermittelt werden kann. Im dargestellten Ausführungsbeispiel ist der Messwertgeber 14.1 als Permanentmagnet ausgeführt und wird mit dem mindestens einen ersten Sensorelement 13 bewegt. Der Messwertaufnehmer 14.2 ist als Hallsensor ausgeführt und ortsfest auf der Leiterplatte 11A angeordnet. Alternativ kann der als Permanentmagnet ausgeführte Messwertgeber 14.1 ortsfest auf der Leiterplatte 11A angeordnet werden und der als Hallsensor ausgeführte Messwertaufnehmer 14.2 kann mit dem ersten Sensorelement 13 bewegt werden.

Der als Hallsensor ausgeführte Messwertaufnehmer 14.2 misst die Stärke des vom als Permanentmagnet ausgeführten Messwertgebers 14.1. Wird das erste Sensorelement 13 um die Schwenkachse SA gedreht, so ändert sich der Abstand zwischen dem als Hallsensor ausgeführten Messwertaufnehmer 14.2 und dem als Permanentmagnet ausgeführten Messwertgeber 14.1 und damit die magnetische Feldstärke, welche der als Hallsensor ausgeführte Messwertaufnehmer 14.2 misst. Diese Anordnung hat zudem den Vorteil, dass der als Hallsensor ausgeführte Messwertaufnehmer 14.2 auf der ortstesten Leiterplatte 11A der Sensoreinheit 12A montiert ist und daher kein Kabel zur Signalübertragung erforderlich ist.

Ausführungsformen der erfindungsgemäßen Vorrichtung zur Überwachung eines Erfassungsfelds ermöglichen in vorteilhafter Weise die Erkennung eines falsch eingestellten Erfassungsfelds.

### Bezugszeichenliste

- 1: Schiebetür
- 3: Türelement
- 5: Erfassungsfeld
- 7: Auswerte- und Steuereinheit
- 9: Speicher
- 10: Vorrichtung zur Überwachung eines Erfassungsfelds
- 11, 11A: Leiterplatte
- 12: Sensoreinheit
- 13: erstes Sensorelement
- 14, 14A: zweites Sensorelement
- 14.1: Messwertgeber
- 14.2: Messwertaufnehmer
- 16: Halterung
- 17: Verbindungskabel
- 18: Anzeigeelement
- 20: Inbetriebnahmevorrichtung
- S: Schwenkbewegung
- SA: Schwenkachse
- FB: Fernbedienung

## Patentansprüche

1. Vorrichtung (10) zur Überwachung eines Erfassungsfelds (5), welches eine Sensoreinheit (12, 12A) mit mindestens einem ersten Sensorelement (13) erzeugt, wobei die Sensoreinheit (12, 12A) über eine Halterung (16) um mindestens eine Achse (SA) verschwenkbar angeordnet ist, wobei die Sensoreinheit (12, 12A) mindestens ein zweites Sensorelement (14, 14A) aufweist, wobei eine Auswerte- und Steuereinheit (7) aus einem Ausgabesignal des mindestens einen zweiten Sensorelements (14, 14A) einen aktuellen Neigungswinkel des mindestens einen ersten Sensorelements (13) ermittelt und auswertet,
**dadurch gekennzeichnet,**
**dass** das mindestens eine zweite Sensorelement (14A) einen Messwertgeber (14.1) und einen Messwertaufnehmer (14.2) aufweist, wobei das Ausgabesignal eine relative Position des Messwertaufnehmers (14.2) zum Messwertgeber (14.1) anzeigt, aus welcher der Neigungswinkel des mindestens einen ersten Sensorelements (13) ermittelbar ist, wobei entweder der Messwertgeber (14.1) oder der Messwertaufnehmer (14.2) mit dem mindestens einen ersten Sensorelement (13) bewegt wird.

2. Vorrichtung nach Anspruch 1,
**dadurch gekennzeichnet,**
**dass** die Auswerte- und Steuereinheit (7) nach Abschluss der Montage einen aktuellen Neigungswinkel als Referenzwinkel in einer Speichereinheit (9) speichert.

3. Vorrichtung nach Anspruch 2,
**dadurch gekennzeichnet,**
**dass** die Auswerte- und Steuereinheit (7) überprüft, ob der Referenzwinkel in einem vorgegebenen Wertebereich liegt, wobei die Auswerte- und Steuereinheit (7) eine Inbetriebnahme einer dem Erfassungsfeld (5) zugeordneten Vorrichtung (1) freigibt, wenn der Referenzwinkel innerhalb des vorgegebenen Wertebereichs liegt, und wobei die Auswerte- und Steuereinheit (7) ein Warnsignal an eine Anzeigeeinheit (18) ausgibt und eine Inbetriebnahme der dem Erfassungsfeld (5) zugeordneten Vorrichtung (1) verhindert, wenn der Referenzwinkel außerhalb des vorgegebenen Wertebereichs liegt.

4. Vorrichtung nach Anspruch 3,
**dadurch gekennzeichnet,**
**dass** das zweite Sensorelement (14, 14A) im Auslieferungszustand einen Neigungswinkel anzeigt, welcher außerhalb des vorgegebenen Wertebereichs für den Referenzwinkel liegt.

5. Vorrichtung nach einem der Ansprüche 2 bis 4,
**dadurch gekennzeichnet,**
**dass** die Auswerte- und Steuereinheit (7) während des Betriebs den aktuellen Neigungswinkel des mindestens einen ersten Sensorelements (13) mit dem vorgegebenen Referenzwinkel vergleicht.

6. Vorrichtung nach Anspruch 5,
**dadurch gekennzeichnet,**
**dass** die Auswerte- und Steuereinheit (7) ein Warnsignal an die Anzeigeeinheit (18) ausgibt und die dem Erfassungsfeld (5) zugeordnete Vorrichtung (1) in einen sicheren Betriebszustand überführt, wenn eine Differenz zwischen dem aktuellen Neigungswinkel und dem vorgegebenen Referenzwinkel außerhalb eines vorgegebenen Toleranzbereichs liegt.

7. Vorrichtung nach einem der Ansprüche 1 bis 6,
**dadurch gekennzeichnet,**
**dass** das mindestens eine zweite Sensorelement (14) als Neigungssensor ausgeführt ist, welcher mit dem ersten Sensorelement (13) bewegt wird und einen Neigungswinkel relativ zu einer vom Schwerefeld der Erde vorgegebenen Lotrichtung anzeigt.

8. Vorrichtung nach einem der Ansprüche 1 bis 7,
**dadurch gekennzeichnet,**
**dass** das mindestens eine erste Sensorelement (13) das Erfassungsfeld (5) im Infrarotfrequenzbereich und/oder im Ultraschallfrequenzbereich und/oder im Radarfrequenzbereich erzeugt.

9. Vorrichtung nach einem der Ansprüche 1 bis 8,
**dadurch gekennzeichnet,**
**dass** das mindestens eine erste Sensorelement (13) als Videosensor ausgeführt ist.

10. Vorrichtung nach Anspruch 8 oder 9,
**dadurch gekennzeichnet,**
**dass** die Auswerte- und Steuereinheit (7) Ausgabesignale des mindestens einen ersten Sensorelements (13) zur Objekterkennung innerhalb des Erfassungsfelds (5) auswertet.

11. Vorrichtung nach einem der Ansprüche 1 bis 10,
**dadurch gekennzeichnet,**
**dass** die dem Erfassungsfeld (5) zugeordnete Vorrichtung (1) eine Tür oder ein Fenster oder eine Maschine ist.

## Claims

1. Device (10) for monitoring a detection field (5) which is generated by a sensor unit (12, 12A) with at least one first sensor element (13), the sensor unit (12, 12A) being arranged via a mounting (16) such that it can be pivoted about at least one axis (SA), the sensor unit (12, 12A) having at least one second sensor element (14, 14A), an evaluation and control unit (7) determining and evaluating a current angle of inclination of the at least one first sensor element (13) from an output signal from the at least one second sensor element (14, 14A),
**characterized in that**
the at least one second sensor element (14A) has a measured value transmitter (14.1) and a measured value receiver (14.2), wherein the output signal indicates a position of the measured value receiver (14.2) relative to the measured value transmitter (14.1), from which the angle of inclination of the at least one first sensor element (13) can be determined, wherein either the measured value transmitter (14.1) or the measured value receiver (14.2) is moved with the at least one first sensor element (13).

2. Device according to Claim 1,
**characterized in that**
following the conclusion of the mounting, the evaluation and control unit (7) stores a current angle of inclination as a reference angle in a memory unit (9).

3. Device according to Claim 2,
**characterized in that**
the evaluation and control unit (7) checks to see whether the reference angle lies in a predefined value range, wherein the evaluation and control unit (7) enables commissioning of a device (1) associated with the detection field (5) when the reference angle lies within the predefined value range, and wherein the evaluation and control unit (7) outputs a warning signal to an indicating unit (18) and prevents commissioning of the device (1) associated with the detection field (5) when the reference angle lies outside the predefined value range.

4. Device according to Claim 3,
**characterized in that**
when delivered, the second sensor element (14, 14A) indicates an angle of inclination which lies outside the predefined value range for the reference angle.

5. Device according to one of Claims 2 to 4,
**characterized in that**
during operation, the evaluation and control unit (7) compares the current angle of inclination of the at least one first sensor element (13) with the predefined reference angle.

6. Device according to Claim 5,
**characterized in that**
the evaluation and control unit (7) outputs a warning signal to the indicating unit (18) and transfers the device (1) associated with the detection field (5) into a secure operating state when a difference between the current angle of inclination and the predefined reference angle lies outside a predefined tolerance range.

7. Device according to one of Claims 1 to 6,
**characterized in that**
the at least one second sensor element (14) is embodied as an inclination sensor, which is moved with the first sensor element (13) and indicates an angle of inclination relative to a vertical direction predefined by the Earth's gravitational field.

8. Device according to one of Claims 1 to 7,
**characterized in that**
the at least one first sensor element (13) generates the detection field (5) in the infrared frequency range and/or in the ultrasonic frequency range and/or in the radar frequency range.

9. Device according to one of Claims 1 to 8,
**characterized in that**
the at least one first sensor element (13) is embodied as a video sensor.

10. Device according to Claim 8 or 9,
**characterized in that**
the evaluation and control unit (7) evaluates output signals from the at least one first sensor element (13) for object recognition within the detection field (5).

11. Device according to one of Claims 1 to 10,
**characterized in that**
the device (1) associated with the detection field (5) is a door or a window or a machine.

## Revendications

1. Dispositif (10) pour la surveillance d'un champ de détection (5) et qui est généré par une unité de détection (12, 12A) ayant au moins un premier élément capteur (13), dans lequel l'unité de détection (12, 12A) est disposée de manière à pouvoir pivoter autour d'au moins un axe (SA) par l'intermédiaire d'un support (16), dans lequel l'unité de détection (12, 12A) comporte au moins un deuxième élément capteur (14, 14A), dans lequel une unité d'évaluation et de commande (7) détermine et évalue, à partir d'un signal de sortie dudit au moins deuxième élément capteur (14, 14A), un angle d'inclinaison actuel dudit au moins un premier élément capteur (13),
**caractérisé en ce que** ledit au moins un deuxième élément capteur (14A) comporte un transducteur de mesure (14.1) et un détecteur de mesure (14.2), dans lequel le signal de sortie indique une position relative du détecteur de mesure (14.2) par rapport au transducteur de mesure (14.1), à partir de laquelle l'angle d'inclinaison dudit au moins un premier élément capteur (13) peut être déterminé, dans lequel soit le transducteur de mesure (14.1), soit le détecteur de mesure (14.2) est déplacé avec ledit au moins un premier élément capteur (13).

2. Dispositif selon la revendication 1,
**caractérisé en ce que** l'unité d'évaluation et de commande (7) stocke un angle d'inclinaison actuel en tant qu'angle de référence dans une unité de stockage (9) après achèvement du montage.

3. Dispositif selon la revendication 2,
**caractérisé en ce que** l'unité d'évaluation et de commande (7) vérifie si l'angle de référence se situe dans une plage de valeurs prédéterminée, dans lequel l'unité d'évaluation et de commande (7) déclenche une mise en service d'un dispositif (1) associé au champ de détection (5) lorsque l'angle de référence se situe dans la plage de valeurs prédéterminée, et dans lequel l'unité d'évaluation et de commande (7) délivre un signal d'avertissement à une unité d'affichage (18) et empêche la mise en service de l'appareil (1) associé au champ de détection (5) lorsque l'angle de référence se situe en dehors de la plage de valeurs prédéterminée.

4. Dispositif selon la revendication 3,
**caractérisé en ce que** le deuxième élément capteur (14, 14A) indique un angle d'inclinaison à l'état délivré qui se situe en dehors de la plage de valeurs prédéterminée pour l'angle de référence.

5. Dispositif selon l'une quelconque des revendications 2 à 4,
**caractérisé en ce que**, pendant le fonctionnement, l'unité d'évaluation et de commande (7) compare l'angle d'inclinaison actuel dudit au moins un premier élément capteur (13) à l'angle de référence prédéterminé.

6. Dispositif selon la revendication 5,
**caractérisé en ce que** l'unité d'évaluation et de commande (7) délivre un signal d'avertissement à l'unité d'affichage (18) et transfère le dispositif (1) associé au champ de détection (5) dans un état de fonctionnement sûr lorsqu'une différence entre l'angle d'inclinaison actuel et l'angle de référence prédéterminé se situe en dehors d'une plage de tolérance prédéterminée.

7. Dispositif selon l'une quelconque des revendications 1 à 6,
**caractérisé en ce que** ledit au moins un deuxième élément capteur (14) est réalisé sous la forme d'un capteur d'inclinaison qui est déplacé avec le premier élément capteur (13) et indique un angle d'inclinaison par rapport à une direction de soudage prédéterminée par le champ de gravité terrestre.

8. Dispositif selon l'une quelconque des revendications 1 à 7,
**caractérisé en ce que** ledit au moins un premier élément capteur (13) génère le champ de détection (5) dans la plage de fréquences infrarouge et/ou ultrasonores et/ou dans la plage de fréquences radar.

9. Dispositif selon l'une quelconque des revendications 1 à 8,
**caractérisé en ce que** ledit au moins un premier élément capteur (13) est réalisé sous la forme d'un capteur vidéo.

10. Dispositif selon la revendication 8 ou 9,
**caractérisé en ce que** l'unité d'évaluation et de commande (7) évalue les signaux de sortie d'au moins un premier élément capteur (13) pour la détection d'objets à l'intérieur du champ de détection (5).

11. Dispositif selon l'une quelconque des revendications 1 à 10,
**caractérisé en ce que** le dispositif (1) associé au champ de détection (5) est une porte, une fenêtre ou une machine.
